# EUROPEAN PATENT SPECIFICATION

(11) **EP 0 765 924 B1**
(45) Date of publication and mention of the grant of the patent: **22.05.2002**
(21) Application number: 96202837.9
(22) Date of filing: 28.06.1993
(51) Int. Cl.: C09K 5/04, C09K 3/30, C11D 7/50

(54) **Azeotropic compositions of perfluoroethane and nitrous oxide**
Azeotropische Zusammensetzungen auf Basis von Perfluorethan und Distickstoffmonoxid
Compositions azéotropes de perfluoréthane et d'oxyde azote

(30) Priority: 10.07.1992 US 911938
(43) Date of publication of application: 02.04.1997
(62) Divisional of application: 93916698.9
(73) Proprietor: E.I. DU PONT DE NEMOURS AND COMPANY, Wilmington Delaware 19898 (US)
(72) Inventor: Shiflett, Mark Brandon, Newark, Delaware 19711 (US); Yokozeki, Akimichi, Greenville, Delaware 19807 (US); Minor, Barbara Haviland, Elkton, Maryland 21921 (US)
(74) Representative: Woodcraft, David Charles

(56) References cited:
- EP-A- 0 174 027
- WO-A-93/07232
- PATENT ABSTRACTS OF JAPAN vol. 017, no. 096 (M-1372) & JP 42 088451 A (NIPPON KENTETSU)
- PATENT ABSTRACTS OF JAPAN vol. 015, no. 239 (M-1126) & JP 30 075449 A (NIPPONDENSO)

## Description

This invention relates to compositions, or mixtures, of fluorinated hydrocarbons and more specifically to azeotropic or azeotrope-like compositions comprising effective amounts of perfluoroethane and nitrous oxide to form an azeotropic or azeotrope-like composition. Such compositions are useful as cleaning agents, expansion agents for polyolefins and polyurethanes, refrigerants, aerosol propellants, heat transfer media, gaseous dielectrics, fire extinguishing agents, power cycle working fluids, polymerization media, particulate removal fluids, carrier fluids, buffing abrasive agents, and displacement drying agents.

Fluorinated hydrocarbons have many uses, one of which is as a refrigerant. In refrigeration applications, a refrigerant is often lost during operation through leaks in shaft seals, hose connections, solder joints, and broken lines. In addition, the refrigerant may be released to the atmosphere during maintenance procedures on refrigeration equipment.

Accordingly, it is desirable to use a single fluorinated hydrocarbon or an azeotropic or azeotrope-like composition that includes one or more fluorinated hydrocarbons as a refrigerant. Some nonazeotropic compositions that include one or more fluorinated hydrocarbons may also be used as refrigerants, but they have the disadvantage of changing composition, or fractionating, when a portion of the refrigerant charge is leaked or discharged to the atmosphere. If a non-azeotropic composition contains a flammable component, the blend could become flammable because of such a change in composition. Refrigerant equipment operation could also be adversely affected due to the change in composition and vapor pressure that results from fractionation.

Fluorinated hydrocarbons may also be used as a cleaning agent or solvent to clean, for example, electronic circuit boards. Electronic components are soldered to circuit boards by coating the entire circuit side of the board with flux and thereafter passing the flux-coated board over preheaters and through molten solder. The flux cleans the conductive metal parts and promotes solder fusion, but leave residues on the circuit boards that must be removed with a cleaning agent.

Preferably, cleaning agents should have a low boiling point, nonflammability, low toxicity, and high solvency power so that flux and flux-residues can be removed without damaging the substrate being cleaned. Further, it is desirable that cleaning agents that include a fluorinated hydrocarbon be azeotropic or azeotrope-like so that they do not tend to fractionate upon boiling or evaporation. If the cleaning agent were not azeotropic or azeotrope-like, the more volatile components of the cleaning agent would preferentially evaporate, and the cleaning agent could become flammable or could have less-desirable solvency properties, such as lower rosin flux solvency and lower inertness toward the electrical components being cleaned. The azeotropic property is also desirable in vapor degreasing operations because the cleaning agent is generally redistilled and reused for final rinse cleaning.

Azeotropic or azeotrope-like compositions of fluorinated hydrocarbons are also useful as blowing agents in the manufacture of close-cell polyurethane, phenolic and thermoplastic foams. Insulating foams require blowing agents not only to foam the polymer, but more importantly to utilize the low vapor thermal conductivity of the blowing agents, which is an important characteristic for insulation value.

Aerosol products employ both single component fluorinate hydrocarbons and azeotropic or azeotrope-like compositions of fluorinated hydrocarbons as propellant vapor pressure attenuators in aerosol systems. Azeotropic mixtures, with their constant compositions and vapor pressures are useful as solvents and propellants in aerosols.

Azeotropic or azeotrope-like compositions that include fluorinated hydrocarbons are also useful as heat transfer media, gaseous dielectrics, fire extinguishing agents, power cycle working fluids such as for heat pumps, inert media for polymerization reactions, fluids for removing particulates from metal surfaces, and as carrier fluids that may be used, for example, to place a fine film of lubricant on metal parts.

Azeotropic or azeotrope-like compositions that include fluorinated hydrocarbons are further useful as buffing abrasive detergents to remove buffing abrasive compounds from polished surfaces such as metal, as displacement drying agents for removing water such as from jewelry or metal parts, as resist-developers in conventional circuit manufacturing techniques employing chlorine-type developing agents, and as strippers for photoresists when used with, for example, a chlorohydrocarbon such as 1,1,1-trichloroethane or trichloroethylene.

Some of the fluorinated hydrocarbons that are currently used in these applications have been theoretically linked to depletion of the earth's ozone layer and to global warming. What is needed, therefore, are substitutes for fluorinated hydrocarbons that have low ozone depletion potentials and low global warming potentials.

The present invention relates to the discovery of azeotropic or azeotrope-like compositions comprising effective amounts of perfluoroethane (FC-116 or CF₃CF₃, boiling point + -78.3°C), and nitrous oxide (N₂O, boiling point = -88.5°C), to form an azeotropic or azeotrope-like composition.

According to the present invention there is provided an azeotropic or azeotrope-like composition of perfluoroethane and nitrous oxide which consists essentially of 35 to 55 weight percent perfluoroethane and 45 to 65 weight percent nitrous oxide, having a boiling point of -51.1 +/- 0.5°C at a pressure of 690 kPa (100 psia).

Effective amounts of perfluoroethane and nitrous oxide to form an azeotropic or azeotrope-like composition, when defined in terms of weight percent of the components are dependent on specific pressure or temperature, as indicated below.

Substantially constant boiling, azeotropic or azeotrope-like compositions of perfluoroethane and nitrous oxide comprise about 35 to 55 weight percent perfluoroethane and about 45 to 65 percent nitrous oxide at 690 kPa (100 psia). These compositions boil at about -51.1 + /- 0.5°C. A preferred composition of the invention is the azeotrope which comprises about 453 weight percent perfluoroethane and about 54.7 weight percent nitrous oxide and which boils at - 51.2°C at 690 kPa (100 psia) and which comprises about 44.8 weight percent perfluoroethane and about 55.2 weight percent nitrous oxide and which boils at -45.55°C at 1233 psia.

It has been found unexpectedly that compositions some distance away from the true azeotropes of FC-116 and N₂O, have differences in dew point and bubble point temperature of less than or equal to about 1°C.

Therefore, included in this invention are compositions of effective amounts of FC-116 and N₂O, such that the compositions have a difference in dew point temperature and bubble point temperature of less than or equal to 1°C. Such compositions include binary compositions of about 35 to 55 weight percent FC-116 and about 45 to 65 weight percent N₂O; all at 690 kPa (100 psia).

For purposes of this invention, "effective amount" is defined as the amount of each component of the inventive compositions which, when combined, results in the formation of an azeotropic or azeotrope-like composition. This definition includes the amounts of each component, which amounts may vary depending on the pressure applied to the composition so long as the azeotropic or azeotrope-like compositions continue to exist at the different pressures, but with possible different boiling points.

Therefore, effective amount includes the amounts, such as may be expressed in weight percentages, of each component of the compositions of the instant invention which form azeotropic or azeotrope-like compositions at pressures other than the pressure described herein.

By "azeotropic or azeotrope-like" composition is meant a constant boiling, or substantially constant boiling, liquid admixture of two or more substances that behaves as a single substance. One way to characterize an azeotropic or azeotrope-like composition is that the vapor produced by partial evaporation or distillation of the liquid has substantially the same composition as the liquid from which it was evaporated or distilled, that is, the admixture distills/refluxes without substantial composition change. Constant boiling or substantially constant boiling compositions, which are characterized as azeotropic or azeotrope-like, exhibit either a maximum or minimum boiling point, as compared with that of the nonazeotropic mixtures of the same components.

For the purposes of this discussion, azeotropic or constant-boiling is intended to mean also essentially azeotropic or essentially-constant boiling. In other words, included within the meaning of these terms are not only the true azeotropes described above, but also other compositions containing the same components in different proportions, which are true azeotropes at other temperatures and pressures, as well as those equivalent compositions which are part of the same azeotropic system and are azeotrope-like in their properties. As is well recognized in this art, there is a range of compositions which contain the same components as the azeotrope, which will not only exhibit essentially equivalent properties for refrigeration and other applications, but which will also exhibit essentially equivalent properties to the true azeotropic composition in terms of constant boiling characteristics or tendency not to segregate or fractionate on boiling.

It is possible to characterize, in effect, a constant boiling admixture which may appear under many guises, depending upon the conditions chosen, by any of several criteria:
* The composition can be defined as an azeotrope of A, B, C (and D...) since the very term "azeotrope" is at once both definitive and limitative, and requires that effective amounts of A, B, C (and D...) for this unique composition of matter which is a constant boiling composition.
* It is well known by those skilled in the art, that, at different pressures, the composition of a given azeotrope will vary at least to some degree, and changes in pressure will also change, at least to some degree, the boiling point temperature. Thus, and azeotrope of A, B, C (and D...) represents a unique type of relationship but with a variable composition which depends on temperature and/or pressure. Therefore, compositional ranges, rather than fixed compositions, are often used to define azeotropes.
* The composition can be defined as a particular weight percent relationship or mole percent relationship of A, B, C (and D...), while recognizing that such specific values point out only one particular relationship and that in actuality, a series of such relationships, represented by A, B, C (and D...) actually exist for a given azeotrope, varied by the influence of pressure.
* An azeotrope of A, B, C (and D...) can be characterized by defining the compositions as an azeotrope characterized by a boiling point at a given pressure, thus giving identifying characteristics without unduly limiting the scope of the invention by a specific numerical composition, which is limited by and is only as accurate as the analytical equipment available.

The azeotrope or azeotrope-like compositions of the present invention can be prepared by any convenient method including mixing or combining the desired amounts. A preferred method is to weigh the desired component amounts and thereafter combine them in an appropriate container.

Specific examples illustrating the invention are given below. Unless otherwise stated therein, all percentages are by weight. It is to be understood that these examples are merely illustrative and in no way are to be interpreted as limiting the scope of the invention.

### FC-116 and Nitrous Oxide

### EXAMPLE 1

A phase study was made on perfluoroethane and nitrous oxide, wherein the composition was varied and the vapor pressures measured, at a constant temperature of -45.55°C. An azeotropic composition was obtained as evidenced by the maximum vapor pressure observed and was identified as follows:
Perfluoroethane = 44.8 weight percent
Nitrous oxide = 55.2 weight percent
Vapor pressure = 12331 (850.2 kPa) at -45.55°C

### EXAMPLE 2

A second phase study on perfluoroethane and nitrous oxide discloses the following azeotropic composition:
Perfluoroethane = 453 weight percent
Nitrous oxide = 54.7 weight percent
Vapor pressure = 690 kPa (100 psia) at -51.2°C

### EXAMPLE 3

A study of dew point temperatures and bubble point confirms the azeotropic or azeotrope-like behavior of compositions of FC-116 and N₂O.

**TABLE 1**

| | Temperatures (°C) at 690 kPa 100 psia | | |
|---|---|---|---|
| Refrigerant Composition | Bubble Point | Dew Point | Delta T |
| HFC-125 + HFC-134a (50+50) | 15.6 | 19.8 | 4.2 |
| HCFC-22 + HCFC-142b (50+50) | 233 | 33.8 | 10.5 |
| FC-116 + N₂O (35+65) | -51.1 | -50.8 | 03 |
| FC-116 + N₂O (40+60) | -51.2 | -51.0 | 0.2 |
| FC-116 + N₂O (50+50) | -512 | -51.0 | 0.2 |
| FC-116 + N₂O (55+45) | -51.1 | -50.6 | 0.5 |

### EXAMPLE 4

A study compares the refrigeration properties of an azeotropic composition of the invention with Refrigerant-503 and perfluoroethane (FC-116). The refrigeration capacity is based on a compressor with a fixed displacement of 3.5 cubic feet per minute. The data is based on a refrigeration cycle with a suction line heat exchanger.

**TABLE 4**

| **COMPARISON OF REFRIGERATION PERFORMANCES** | | | |
|---|---|---|---|
| | Refrig. 503 | FC-116 | FC-116/N₂O (wt. percents) (45/55) |
| Evaporator Temp,°F °C | -80.0 -62.2 | -80.0 -62.2 | -80.0 -62.2 |
| | | | |
| Evaporator Pres, psia kPa | 54.4 375.1 kPa | 32.0 220.6 kPa | 65.2 449.5 |
| | | | |
| Condenser Temp, °F °C | -10.0 -23.3 | -10.0 -23.3 | -10.0-23.3 |
| | | | |
| Condenser Pres, psia kPa | 218.0 1503 | 1383 953.5 | 257.0 1772 |
| | | | |
| Return Gas Temp, °F °C | -60.0 -51.1 | -60.0 -51.1 | -60.0 -51.1 |
| | | | |
| | | | |
| Compressor Discharge, °F | 51.8 11 | 7.2 -13.8 | 58.6 14.8 |
| | | | |
| | | | |
| Coefficient of Performance | 3.8 | 3.6 | 3.9 |
| | | | |
| Capacity Btu/min W | 204 3585 | 113 1986 | 252 4428 |

For a refrigeration cycle typified by the above conditions, the capacity and the COP of FC-116 is increased by adding N₂O to the FC-116. These results show that a composition of FC-116 and N₂O improves the capacity of a refrigeration cycle when compared to Refrigerant 503.

The novel azeotrope or azeotrope-like compositions of FC-116 and N₂O may be used to produce refrigeration by condensing the compositions and thereafter evaporating the condensate in the vicinity of the body to be cooled.

The novel azeotrope or azeotrope-like compositions may also be used to produce heat by condensing the refrigerant in the vicinity of the body to be heated and thereafter evaporating the refrigerant.

The use of azeotropic or azeotrope-like compositions eliminates the problem of component fractionation and handling in systems operations, because these compositions behave essentially as a single substance. Several of the novel azeotrope-like compositions also offer the advantage of being essentially nonflammable.

In addition to refrigeration applications, the novel constant boiling compositions of the invention are also useful as aerosol propellants, heat transfer media, gaseous dielectrics, fire extinguishing agents, expansion agents for polyolefins and polyurethanes and as power cycle working fluids.

Additives such as lubricants, corrosion inhibitors, stabilizers, dyes, and other appropriate materials may be added to the novel compositions of the invention for a variety of purposes provided they do not have an adverse influence on the composition, for their intended applications.

## Claims

1. An azeotropic or azeotrope-like composition of perfluoroethane and nitrous oxide which consists essentially of 35 to 55 weight percent perfluoroethane and 45 to 65 weight percent nitrous oxide, having a boiling point of -51.1 +/- 0.5°C at a pressure of 690 kPa (100 psia).

2. A process for producing refrigeration, comprising condensing an azeotropic or azeotrope-like composition of claim 1 and thereafter evaporating said composition in the vicinity of the body to be cooled.

3. A process for producing heat comprising condensing an azeotropic or azeotrope-like composition of claim 1 in the vicinity of a body to be heated.

## Patentansprüche

1. Azeotrope oder azeotrop-ähnliche Zusammensetzung von Perfluorethan und Stickstoff(I)-oxid, im wesentlichen bestehend aus 35% bis 55 Gewichtsprozent Perfluorethan und 45% bis 65 Gewichtsprozent Stickstoff(I)-oxid mit einem Siedepunkt von -51,1 ± 0,5°C bei einem Druck von 690 kPa (100 psia).

2. Verfahren zur Kältererzeugung, umfassend das Kondensieren einer azeotropen oder azeotrop-ähnlichen Zusammensetzung nach Anspruch 1 und danach Verdampfen der Zusammensetzung in der Nähe des zu kühlenden Stoffes.

3. Verfahren zur Wärmeerzeugung, umfassend das Kondensieren einer azeotropen oder azeotrop-ähnlichen Zusammensetzung nach Anspruch 1 in der Nähe des zu erhitzenden Stoffes.

## Revendications

1. Composition azéotrope ou de type azéotrope de perfluoroéthane et d'oxyde nitreux qui est constituée essentiellement de 35 à 55 pour-cent en poids de perfluoroéthane et de 45 à 65 pour-cent en poids d'oxyde nitreux ayant un point d'ébullition de -51,1 ± 0,5°C à une pression de 690 kPa (100 psia).

2. Procédé pour produire une réfrigération, comprenant la condensation d'une composition azéotrope ou de type azéotrope suivant la revendication 1 et par la suite l'évaporation de ladite composition dans le voisinage du corps à refroidir.

3. Procédé pour produire de la chaleur, comprenant la condensation d'une composition azéotrope ou de type azéotrope suivant la revendication 1 dans le voisinage d'un corps à chauffer.
